# FASCICULE DE BREVET EUROPEEN

(11) **EP 0 634 586 B1**
(45) Date de publication et mention de la délivrance du brevet: **29.12.1997**
(21) Numéro de dépôt: 94401593.2
(22) Date de dépôt: 11.07.1994
(51) Int. Cl.: F16D 66/02

(54) **Embout pour témoin d'usure de garniture de friction, notamment de plaquette de frein**
Endstück für einen Reibbelagverschleisssensor, insbesondere für Bremsbeläge
Tip for a friction lining wear sensor, particularly for brake pads

(30) Priorité: 12.07.1993 FR 9308560
(43) Date de publication de la demande: 18.01.1995
(73) Titulaire: COMPAGNIE PLASTIC OMNIUM, 69007 Lyon (FR)
(72) Inventeur: Bartocci, Marcel, F-52200 Langres (FR); Schauterden, Jean-Claude, F-52200 Langres (FR); Schosseler, René, F-95100 Argenteuil (FR)
(74) Mandataire: Leszczynski, André

(56) Documents cités:
- EP-A- 0 304 356
- EP-A- 0 475 335
- DE-A- 3 307 394
- DE-A- 4 117 423
- FR-A- 2 287 625

## Description

La présente invention concerne un embout pour témoin d'usure de garniture de friction, notamment de plaquette de frein.

On connaît déjà de tels embouts qui sont assujettis à l'extrémité d'un fil conducteur électrique et sont insérés dans la garniture de friction suivant une direction qui est perpendiculaire ou parallèle au plan d'usure de la garniture.

Par exemple, EP-A-0 304 356 décrit un témoin d'usure, pour frein à disque ou à tambour, comprenant un embout sous la forme d'une bague, et un conducteur électrique sous la forme d'un câble coaxial dont l'âme et la gaine conductrices sont connectées par une douille.

La mise en place de ces embouts s'effectue selon différents procédés qui nécessitent tous un outillage particulier ou l'application d'une force importante pour engager l'embout dans son logement.

De ce fait, l'installation d'un dispositif de détection d'usure est rendue complexe et coûteuse.

La présente invention vise à fournir un embout pour témoin d'usure de garniture de friction qui présente l'avantage d'être d'une grande simplicité de mise en place et de ne nécessiter aucun outillage spécifique. L'embout selon l'invention est en outre particulièrement simple et économique.

La présente invention a pour objet un embout pour témoin d'usure de garniture de friction montée sur une plaque-support, notamment une plaquette de frein, destiné à être assujetti à l'extrémité d'un fil conducteur électrique et encliqueté dans une encoche réalisée dans la plaque-support, comportant une partie de verrouillage qui, en position de repos, ne peut être ni engagée ni dégagée de l'encoche de la plaque-support, et qui est apte à se déformer élastiquement pour prendre une position de manoeuvre permettant son engagement ou son dégagement de ladite encoche, ladite partie de verrouillage de l'embout comportant un logement dans lequel le fil conducteur électrique peut être inséré en empêchant ladite partie de verrouillage de se déformer élastiquement pour prendre sa position de manoeuvre, caractérisé par le fait que le logement pour le fil conducteur électrique débouche latéralement vers l'extérieur par un passage permettant l'insertion du fil.

En d'autres termes, lorsque le fil conducteur électrique est inséré dans le logement de la partie de verrouillage, cette dernière ne peut plus être ni encliquetée dans l'encoche de la plaque-support, ni retirée de celle-ci. Au contraire, en l'absence du fil conducteur électrique dans le logement de la partie de verrouillage, celle-ci peut être aisément déformée par une action extérieure pour être engagée dans l'encoche de la plaque-support, ou en être retirée.

Dans ces conditions, on comprend que la mise en place d'un embout selon l'invention s'effectue de manière particulièrement simple. Il suffit en effet de mettre en place ledit embout sur la plaque-support en déformant élastiquement sa partie de verrouillage pour l'encliqueter dans l'encoche prévue à cet effet sur la plaque-support et d'insérer le fil dans le logement de la partie de verrouillage. De cette manière, ladite partie de verrouillage ne peut plus être déformée élastiquement et donc ne peut plus se dégager de l'encoche de la plaque-support.

Selon l'invention, l'ensemble de ces opérations peut être réalisé à la main.

Dans un mode de réalisation préféré de l'invention, l'axe du logement de la partie de verrouillage est agencé de telle manière que lorsque l'embout est inséré dans le garniture de friction, le fil sortant de la garniture est rabattu, d'un angle d'environ 90°, sur le côté opposé à la surface d'usure de ladite garniture et s'insère dans le logement de la partie de verrouillage.

Dans un mode de réalisation préféré de l'invention, la partie de verrouillage de l'embout comporte deux ailes élastiquement déformables qui sont aptes à être rapprochées l'une de l'autre pour prendre la position de manoeuvre permettant leur engagement dans l'encoche de la plaque-support, le logement pour le fil conducteur électrique étant prévu entre lesdites ailes et présentant un diamètre tel que la présence du fil conducteur électrique entre les ailes empêche ces dernières de se rapprocher pour prendre la position de manoeuvre permettant leur engagement ou leur dégagement de l'encoche de la plaque-support.

Dans une variante préférée de ce mode de réalisation, la paroi intérieure des ailes présente une surface adaptée au maintien en position du fil conducteur électrique, par exemple en comportant chacune une nervure parallèle à l'axe longitudinal du logement.

Selon un premier mode de réalisation de l'invention, l'embout comporte une partie cylindrique, également désignée fût, qui est destinée à pénétrer à l'intérieur d'un orifice prévu dans la garniture de friction, au voisinage de la plaque-support.

Selon l'invention, il n'est pas nécessaire de prévoir un moyen de verrouillage du fût à l'intérieur de l'orifice de la garniture de friction, dans la mesure où l'embout est maintenu en place sur la plaque-support au moyen de sa partie de verrouillage qui est encliquetée dans l'encoche.

Un tel embout comportant un fût peut être prévu pour recevoir un fil conducteur électrique simple ou double, comme cela est bien connu pour les embouts de témoins d'usure de la technique antérieure.

Dans le cas d'un fil conducteur électrique simple, la partie cylindrique, ou fût, est creuse et le fil conducteur électrique est inséré à l'intérieur de ladite partie cylindrique où il est maintenu en place selon une technique connue, par exemple par collage ou surmoulage.

Un fil conducteur électrique de type coaxial peut identiquement être inséré dans le fût.

Dans le cas d'un fil conducteur électrique double, ladite partie cylindrique, ou fût, est avantageusement pleine et comporte deux rainures s'étendant selon des génératrices situées de part et d'autre de son axe, réunies à l'extrémité de ladite partie cylindrique par une rainure qui s'étend selon un diamètre de cette partie cylindrique.

Le fil conducteur électrique est alors maintenu sur la partie cylindrique, ou fût, en passant à l'intérieur des rainures, mais à l'extérieur de ladite partie cylindrique.

Pour un embout à fût recevant un fil conducteur électrique double, la présente invention présente l'avantage supplémentaire que ledit fil peut être maintenu dans les rainures du fut, y compris lorsque l'embout n'est pas encore monté sur une plaque-support, ce que la plupart des embouts à fil double de la technique antérieure ne permettent pas de manière aisée.

En effet, après positionnement du fil dans les rainures, celui-ci doit être maintenu tendu pour demeurer sur le fût. A défaut d'être tendu, le fil sortirait des rainures.

Grâce au logement pour le fil prévu selon l'invention dans la partie de verrouillage de l'embout, le fil peut être maintenu tendu par insertion dans ledit logement, avant même que l'embout ne soit mis en place sur la plaque-support. Cet avantage permet de préparer des embouts munis de fils conducteurs électriques doubles avant de mettre ces embouts en place ultérieurement sur des plaques-supports. Par exemple, les deux opérations de montage du fil sur l'embout et de mise en place de l'embout sur une plaque-support peuvent être réalisées sur deux sites industriels différents.

A cet effet, on procède de la manière suivante : le fil est positionné dans les rainures du fût, puis bloqué tendu dans le logement de la partie de verrouillage. L'embout ainsi préparé peut alors être envoyé sur un site de montage sans que le fil ne sorte des rainures. Sur le site de montage, le fil est extrait du logement de manière à permettre la déformation élastique de la partie de verrouillage de l'embout. L'embout est encliqueté dans l'encoche de la plaque-support et le fil est à nouveau inséré dans le logement, ce qui a pour effet d'empêcher le dégagement de la partie de verrouillage de l'encoche de la plaque-support.

Selon un troisième mode de réalisation de l'invention, l'embout ne comporte pas de partie cylindrique, ou fût, et le fil conducteur électrique est directement engagé dans la garniture de friction.

Selon un mode de réalisation particulier de l'invention, l'embout comporte un écran thermique destiné à protéger la portion de fil conducteur électrique située entre la garniture de friction et le logement de la partie de verrouillage des hautes températures auxquelles elle est exposée du fait de l'élévation de température d'un disque frottant sur ladite garniture de friction.

Cet écran se situe en regard du logement pour le fil conducteur électrique de la partie de verrouillage, c'est à dire dans le prolongement du fût ou, en l'absence de fût, dans le prolongement de l'orifice prévu dans la garniture de friction, en étant placé du côté de la surface d'usure de la garniture de friction.

Avantageusement, l'écran thermique est réalisé d'un seul tenant avec l'embout qui est constitué d'un matériau résistant à des températures de l'ordre de 450°C, tel que notamment un polyimide, une résine phénolique, du PEK (polyétherkétone), ou du PEEK (polyétherétherkétone).

Dans le but de mieux faire comprendre l'invention on va en décrire maintenant deux modes de réalisation donnés à titre d'exemples non limitatifs en référence au dessin annexé dans lequel :
- la figure 1 est une vue en perspective d'un embout selon un premier mode de réalisation de l'invention,
- la figure 2 est une vue en perspective d'un embout selon un second mode de réalisation de l'invention,
- la figure 3 est une vue selon la flèche III de la figure 2,
- la figure 4 représente une portion d'une plaquette de frein vue en coupe selon IV-IV de la figure 6,
- la figure 5 est une vue selon la flèche V de la figure 2, et
- la figure 6 est une vue en coupe selon VI-VI de la figure 4.

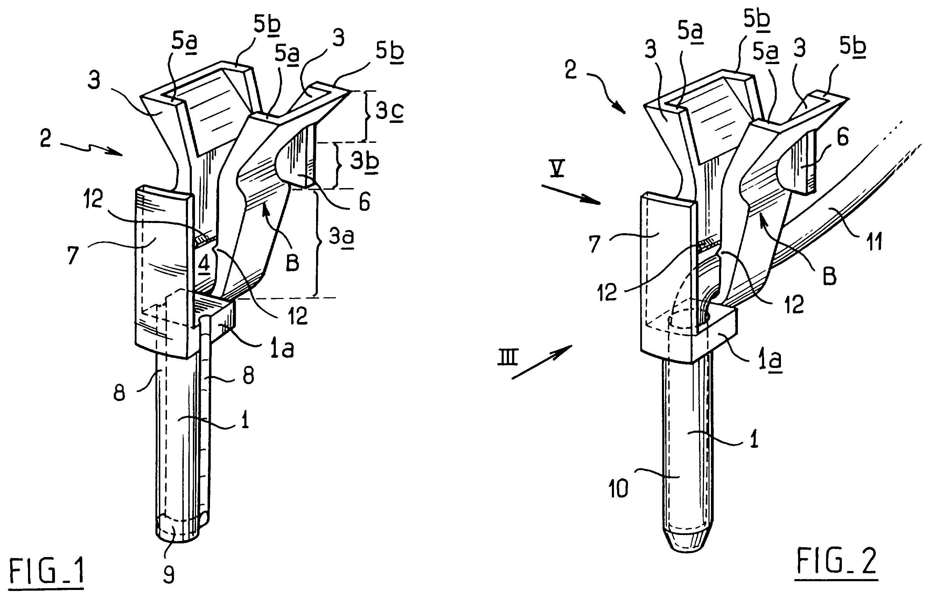

Les deux embouts représentés aux figures 1 et 2 sont réalisés en un matériau résistant à de très hautes températures de l'ordre de 450°C, par exemple en PEEK.

A l'exception de leur partie cylindrique 1 qui sera décrite ultérieurement, les deux embouts des figures 1 et 2 sont identiques.

Chaque embout comporte, conformément à l'invention, une partie de verrouillage 2 constituée par deux ailes élastiquement déformables 3 dont la partie inférieure 3a présente une section extérieure en forme de V.

La partie médiane 3b desdites ailes 3 présente un étranglement en section extérieure, de sorte que l'extrémité supérieure de la partie inférieure 3a constitue un bossage B sur la paroi extérieure de chaque aile 3.

La partie supérieure 3c des ailes 3 présente une section extérieure évasée.

Les deux ailes 3 définissent un logement intérieur 4 entre leurs parois intérieures qui sont parallèles dans la position au repos de la partie de verrouillage 2. Le logement 4 est fermé inférieurement par la partie de raccordement des deux ailes 3 et débouche supérieurement vers l'extérieur par un passage évasé.

Les bords latéraux des ailes 3 comportent des nervures de renforcement 5a et 5b dans leurs parties médiane 3b et supérieure 3c.

La paroi extérieure de chaque aile 3 comporte, à hauteur des parties médiane 3b et supérieure 3c, une plaquette 6 de faible épaisseur située dans le plan des nervures 5b opposées à la partie cylindrique 1.

En position de repos de la partie de verrouillage 2, les plaquettes 6 sont inscrites dans un rectangle dont deux côtés sont parallèles à l'axe de la partie cylindrique 1.

La partie de verrouillage 2 se raccorde inférieurement à la partie cylindrique 1 par une embase 1a solidaire de l'extrémité supérieure de ladite partie cylindrique 1.

A l'opposé de la partie de verrouillage 2, l'embase la comporte un écran thermique 7 de forme rectangulaire qui s'étend parallèlement au bord des ailes 3 jusqu'à hauteur de la partie médiane 3b desdites ailes 3.

L'épaisseur de l'écran 7 est relativement faible, elle doit être déterminée en fonction du matériau utilisé, de sorte que ledit écran 7 constitue une protection suffisante pour que le fil conducteur électrique résiste aux températures d'utilisation d'une plaquette de frein.

La partie cylindrique 1 de l'embout représenté à la figure 1 est pleine et comporte deux rainures longitudinales 8 qui s'étendent sur toute la longueur de ladite partie 1 en étant réunies à l'extrémité inférieure de la partie cylindrique 1 par une rainure 9 de même section que les rainures 8.

Sur la figure 2, la partie cylindrique 1 comporte une cavité intérieure cylindrique 10 fermée à l'extrémité inférieure de ladite partie cylindrique 1.

Conformément à l'invention, chaque embout est apte à recevoir un fil conducteur électrique.

Sur la figure 2, le chiffre de référence 11 désigne un fil conducteur électrique qui est inséré dans la cavité 10, de la partie cylindrique 1 de l'embout.

Le fil conducteur électrique 11 est maintenu dans la cavité 10 par collage selon une technique connue.

A la sortie de la cavité 10, le fil conducteur électrique 11 est rabattu à 90° entre les ailes 3 de l'embout pour s'insérer dans le logement 4 dont les dimensions correspondent sensiblement à celles de la gaine extérieure du fil 11.

Sur la paroi intérieure des ailes 3, on remarque que des nervures 12 permettent de maintenir le fil 11 recourbé à angle droit.

De même, l'embout de la figure 1 est apte à recevoir un fil conducteur électrique double (non représenté) passant dans les rainures 8 et 9 où il est maintenu en position par traction, ledit fil étant bloqué entre les deux ailes 3 à l'intérieur du logement 4.

On comprend qu'étant bloqué entre les ailes 3, le fil demeure tendu et se maintient à l'intérieur des rainures 8 et 9.

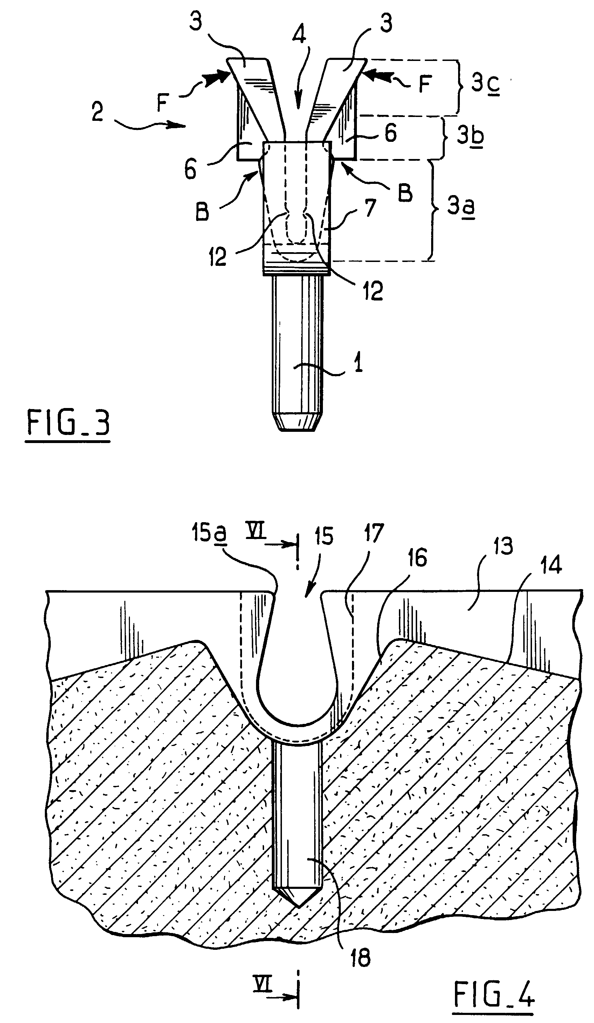

En référence aux figures 3 à 6, on va maintenant décrire le mode d'encliquetage de l'embout selon l'invention.

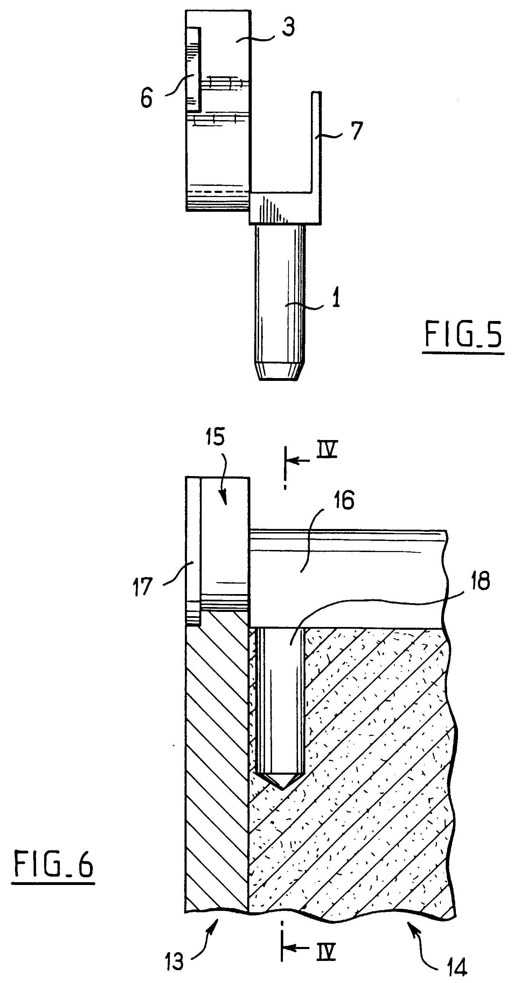

Les figures 4 et 6 représentent une plaquette de frein comportant une plaque-support 13 sur laquelle est montée une garniture de friction 14.

Une encoche 15 est réalisée dans la plaque-support 13, un dégagement 16 étant prévu dans la garniture de friction 14 autour de l'encoche 15.

L'encoche 15 présente une forme sensiblement circulaire terminée à son embouchure par un col 15a de plus faible largeur.

Un alésage 17 est réalisé autour de l'encoche 15 sur la face de plaque-support 13 opposée à la garniture de friction 14. L'épaisseur de l'alésage 17 est sensiblement égale à celle des plaquettes 6 de l'embout selon l'invention, comme on le voit sur les figures 5 et 6.

Comme on le voit sur les figures 3 et 4, l'alésage 17 présente une largeur sensiblement égale à la distance qui sépare les deux bords les plus éloignés des deux plaquettes 6.

La garniture de friction 14 est pourvue d'un orifice 18 qui se situe dans l'axe de l'encoche 15 et à une distance de la plaque-support 13 telle que ledit orifice 18 se trouve dans l'épaisseur de la garniture de friction à partir de laquelle il est nécessaire de signaler le niveau d'usure de cette garniture de friction.

La profondeur et le diamètre extérieur de l'orifice 18 correspondent sensiblement à la hauteur et au diamètre de la partie cylindrique 1 de l'embout.

Le mode d'encliquetage de l'embout selon l'invention va maintenant être décrit.

Pour des raisons de clarté, le fil conducteur électrique n'a pas été représenté sur les figures 3 et 5, mais il est clair qu'avant insertion de la partie cylindrique 1 dans l'orifice 18, le fil conducteur électrique est déjà mis en place dans l'embout. On suppose cependant que le fil conducteur électrique n'est pas inséré dans le logement 4 situé entre les ailes 3.

On exerce d'abord une pression sur les ailes suivant la direction indiquée par les flèches F sur la figure 3.

Cette action se traduit par une déformation desdites ailes 3 qui se rapprochent l'une de l'autre.

Du fait de la présence des plaquettes 6, la partie médiane 3b des ailes 3, bien que d'épaisseur réduite est suffisamment rigidifiée pour que la déformation élastique des ailes s'effectue principalement au voisinage de leur partie inférieure de raccordement.

Cette déformation se traduit par une diminution du volume laissé libre dans le logement 4 et par un rapprochement des ailes 3, d'où une diminution de la distance qui sépare les deux bossages B.

A l'état comprimé des ailes 3, la partie de verrouillage 2 de l'embout se trouve en position de manoeuvre.

L'embout peut alors être inséré dans son logement, la partie cylindrique 1 pénétrant dans l'orifice 18, tandis que les ailes 3 s'encliquètent dans l'encoche 15 de la plaque-support 13.

Simultanément, les plaquettes 6 s'engagent dans l'alésage 17 de la plaque-support 13.

Après engagement de l'embout sur la plaque-support, la pression exercée selon les flèches F peut être relâchée.

Selon l'invention, on rabat le fil conducteur électrique sortant de la partie cylindrique 1 dans le logement 4 situé entre les ailes 3, comme représenté sur la figure 2, ce qui a pour effet d'occuper le volume laissé libre dans le logement 4 situé entre les ailes 3.

Une fois le fil inséré dans le logement 4, les ailes 3 ne peuvent plus se rapprocher, ce qui empêche tout dégagement intempestif de la partie de verrouillage 2 de l'encoche 15.

On remarque que les plaquettes 6, qui ont pour première fonction d'empêcher un fléchissement de la partie médiane 3b des ailes 3, jouent un second rôle d'amélioration de l'assise de l'embout dans la plaque-support 13.

On remarque que, grâce à l'encliquetage de la partie de verrouillage 2 de l'embout, il n'est pas nécessaire d'assurer le verrouillage de la partie cylindrique 1 dans l'orifice 18.

D'après ce qui précède, il apparaît que le mode d'encliquetage de l'embout selon l'invention s'effectue de manière particulièrement simple et ne nécessite l'utilisation d'aucun outillage particulier.

On remarque également que la présence de l'écran thermique 7 s'avère profitable au fil conducteur électrique lors de l'utilisation de la garniture de friction, un disque d'usure de la garniture émettant au voisinage de ce fil conducteur électrique un rayonnement thermique qui soumet l'embout à des températures de l'ordre de 450°C.

Grâce à l'écran thermique 7, on évite toute dégradation prématurée du fil conducteur électrique avant que la partie cylindrique 1 n'ait été entamée par le disque d'usure.

On notera que, selon l'invention, la déformation élastique de la partie de verrouillage est telle que cette dernière peut être facilement encliquetée dans l'encoche prévue sur la plaque-support. Cependant, il n'est pas nécessaire que la position de manoeuvre de la partie de verrouillage autorise un libre engagement de celle-ci dans l'encoche.

En d'autres termes, il n'est pas nécessaire qu'en position de manoeuvre de la partie de verrouillage, les deux bossages B se rapprochent pour se trouver à une distance l'un de l'autre inférieure à la largeur du col de l'encoche, l'exercice d'une force selon les flèches F ayant simplement pour objet de positionner la partie de verrouillage dans une configuration qui permet son encliquetage manuel.

Il est bien entendu que le mode de réalisation qui vient d'être décrit ne présente aucun caractère limitatif et qu'il pourra recevoir toutes modifications désirables sans sortir pour cela du cadre de l'invention tel que défini dans les revendications.

## Revendications

1. Embout (1) pour témoin d'usure de garniture de friction montée sur une plaque-support (16), notamment une plaquette de frein, destiné à être assujetti à l'extrémité d'un fil conducteur électrique (11) et encliqueté dans une encoche (15) réalisée dans la plaque-support (16), comportant une partie de verrouillage (2) qui, en position de repos, ne peut être ni engagée, ni dégagée de l'encoche (15) de la plaque-support (16), et qui est apte à se déformer élastiquement pour prendre une position de manoeuvre permettant son engagement ou son dégagement de ladite encoche (15), ladite partie de verrouillage (2) de l'embout comportant un logement (4) dans lequel le fil conducteur électrique (11) peut être inséré en empêchant ladite partie de verrouillage (2) de se déformer élastiquement pour prendre sa position de manoeuvre, caractérisé par le fait que le logement (4) pour le fil conducteur électrique débouche latéralement vers l'extérieur par un passage permettant l'insertion du fil.

2. Embout selon la revendication 1, caractérisé par le fait que l'axe du logement (4) de la partie de verrouillage est agencé de telle manière que, lorsque l'embout est inséré dans la garniture de friction, le fil sortant de la garniture est rabattu, d'un angle d'environ 90°, sur le côté opposé à la surface d'usure de ladite garniture et s'insère dans le logement (4) de la partie de verrouillage.

3. Embout selon l'une quelconque des revendications 1 et 2, caractérisé par le fait que la partie de verrouillage (2) de l'embout comporte deux ailes (3) élastiquement déformables qui sont aptes à être rapprochées l'une de l'autre pour prendre la position de manoeuvre, le logement (4) pour le fil conducteur électrique (11) étant prévu entre lesdites ailes (3) et présentant un diamètre tel que la présence du fil conducteur électrique (11) entre les ailes empêche ces dernières de se rapprocher pour prendre la position de manoeuvre permettant leur engagement ou leur dégagement de l'encoche de la plaque-support (16) .

4. Embout selon la revendication 3, caractérisé par le fait que la paroi intérieure des ailes (3) présente une surface adaptée au maintien en position du fil conducteur électrique (11), par exemple en comportant chacune une nervure (12) parallèle à l'axe longitudinal du logement (4).

5. Embout selon l'une quelconque des revendications 1 à 4, caractérisé par le fait qu'il comporte une partie cylindrique (1), destinée à pénétrer à l'intérieur d'un orifice (18) prévu dans la garniture de friction (14) au voisinage de la plaque-support (13).

6. Embout selon la revendication 5, caractérisé par le fait que ladite partie cylindrique (1) est creuse.

7. Embout selon la revendication 5, caractérisé par le fait que ladite partie cylindrique (1) comporte deux rainures (8) s'étendant le long de génératrices situées de part et d'autre de son axe, réunies à l'extrémité de ladite partie cylindrique (1) par une rainure (9) qui s'étend selon un diamètre de ladite partie cylindrique (11).

8. Embout selon l'une quelconque des revendications 1 à 7, caractérisé par le fait qu'il comporte, en regard du logement (4), un écran thermique (7) destiné, lorsque l'embout est inséré dans la garniture de friction, à protéger la portion de fil conducteur électrique située entre la garniture de friction et le logement (4) de la partie de verrouillage.

9. Embout selon l'une quelconque des revendications 1 à 8, caractérisé par le fait qu'il est constitué d'un matériau résistant à des températures de l'ordre de 450°C tel que notamment un polyimide, une résine phénolique, du PEK ou du PEEK.

## Claims

1. A terminal fitting (1) for a brake lining wear indicator mounted on a supporting plate (16), in particular a brake pad, intended to be fastened to the end of an electrically conductive wire (11) and catch engaged in a slot (15) made in the supporting plate (16), comprising a locking part (2) which in the rest position can be neither engaged in, nor disengaged from, the slot (15) of the supporting plate (16), and which is capable of elastic deformation to assume a manipulating position permitting its engagement in, or disengagement from,the said slot (15), the said locking part (2) of the terminal fitting comprising a groove (4) into which the electrically conductive wire (11) can be inserted, preventing tne said locking part (2) from being elastically deformed to assume its manipulating position, characterized in that the groove (4) for the electrically conductive wire opens out at the side towards the outside via a passage allowing the wire to be inserted.

2. A terminal fitting according to claim 1, characterized in that the axis of the groove (4) of the locking part is arranged in such a way that when the terminal fitting is inserted in the friction lining (14), the wire emerging from the lining is bent back through an angle of approximately 90° on the opposite side to the surface of wear of the said lining and is inserted in the groove (4) of the locking part.

3. A terminal fitting according to any one of claims 1 and 2, characterized in that the locking part (2) of the terminal fitting has two elastically deformable wings (3) which are capable of being brought close to one another to assume the manipulating position, the groove (4) for the electrically conductive wire (11) being provided between the said wings (3) and having a diameter such that the presence of the electrically conductive wire (11) between the wings prevents the latter from coming close to one another to assume the manipulating position permitting their engagement in, or disengagement from the slot of the supporting plate (16).

4. A terminal fitting according to claim 3, characterized in that the internal side of the wings (3) has a surface made suitable for keeping the electrically conductive wire (11) in position, for example, by each having a rib (12) parallel to the longitudinal axis of the groove (4).

5. A terminal fitting according to any one of claims 1 to 4, characterized in that it has a cylindrical part (1) intended to penetrate inside an opening (18) provided in the friction lining (14) in the vicinity of the supporting plate (13).

6. A terminal fitting according to claim 5, characterized in that the said cylindrical part (1) is hollow.

7. A terminal fitting according to claim 5, charactenzed in that the said cylindrical part (1) has two grooves (8) extending along generators situated on either side of its axis, joined to the end of the said cylindrical part (1) ) by a groove (9) which extends along a diameter of the said cylindrical part (1).

8. A terminal fitting according to any one of claims 1 to 7, characterized in that it has opposite the groove (4) a heat shield (7), intended to protect the portion of the electrically conductive wire (11) situated between the friction lining and the groove (4) of the locking part, when the terminal fitting is inserted in the friction lining.

9. A terminal fitting according to any one of claims 1 to 8, characterized in that it is made of a material withstanding temperatures of the order of 450°C, such as, in particular, a polyimide, a phenolic resin, PEK or PEEK.

## Patentansprüche

1. Endhülse zur Verschleißanzeige eines auf einer Trägerplatte, insbesondere einer Bremsbacke, montierten Reibbelages, die dazu bestimmt ist, am Ende einer elektrisch leitenden Ader befestigt und in eine in der Trägerplatte ausgebildete Kerbe eingerastet zu werden, mit einem Verriegelungsteil (2), der in der Ruhestellung weder in die Kerbe (15) der Trägerplatte (16) eingerastet noch aus dieser ausgerastet werden kann und der sich elastisch verformen kann, um eine Betätigungsstellung einzunehmen, die sein Einrasten in oder Ausrasten aus der Kerbe (15) gestattet, wobei der Verriegelungsteil (2) der Endhülse eine Aufnahme (4) aufweist, in die die elektrisch leitende Ader (11) eingesteckt werden kann, so daß sie den Verriegelungsteil (2) daran hindert, sich elastisch zu verformen, um seine Betätigungsstellung einzunehmen, dadurch gekennzeichnet, daß die Aufnahme (4) für die elektrisch leitende Ader sich über einen das Einführen der Ader ermöglichenden Durchlaß seitlich nach außen öffnet.

2. Endhülse nach Anspruch 1, dadurch gekennzeichnet, daß die Achse der Aufnahme (4) des Verriegelungsteils so angeordnet ist, daß, wenn die Endhülse in den Reibbelag eingeführt ist, die aus dem Reibbelag austretende Ader um einen Winkel von etwa 90° zu der der Verschleißfläche dieses Belages entgegengesetzten Seite umgelegt wird und in die Aufnahme (4) des Verriegelungsteil eintritt.

3. Endhülse nach Anspruch 1 oder 2, dadurch gekennzeichnet, daß der Verriegelungsteil (2) der Endhülse zwei elastisch verformbare Flügel (3) aufweist, die sich aufeinander zu bewegen können, um die Betätigungsstellung einzunehmen, wobei die Aufnahme (4) für die elektrisch leitende Ader (11) zwischen diesen Flügeln (3) vorgesehen ist und einen solchen Durchmesser besitzt, daß die Anwesenheit der elektrisch leitenden Ader (11) zwischen den Flügeln diese daran hindert, sich aufeinander zu zu bewegen, um die Betätigungsstellung einzunehmen, die ihr Einrasten in die oder ihr Ausrasten aus der Kerbe der Trägerplatte (16) ermöglicht.

4. Endhülse nach Anspruch 3, dadurch gekennzeichnet, daß die Innenwand der Flügel (3) eine Oberfläche bildet, die dazu ausgebildet ist, die elektrisch leitende Ader in Position zu halten, beispielsweise indem sie je eine zu der Längsachse der Aufnahme (4) parallele Rippe (12) aufweist.

5. Endhülse nach einem der Ansprüche 1 bis 4, dadurch gekennzeichnet, daß sie einen zylindrischen Teil (1) aufweist, der dazu bestimmt ist, in das Innere einer Öffnung (18) einzutreten, die in der Nähe der Trägerplatte (13) in dem Reibbelag (14) vorgesehen ist.

6. Endhülse nach Anspruch 5, dadurch gekennzeichnet, daß der zylindrische Teil (1) hohl ist.

7. Endhülse nach Anspruch 5, dadurch gekennzeichnet, daß der zylindrische Teil (1) zwei Nuten (8) aufweist, die sich längs beiderseits seiner Achse liegender Mantellinien erstrecken und am Ende des zylindrischen Teils (1) durch eine Nut (9) verbunden sind, die sich längs eines Durchmessers des zylindrischen Teils (11) erstreckt.

8. Endhülse nach einem der Ansprüche 1 bis 7, dadurch gekennzeichnet, daß sie, gegenüberliegend zu der Aufnahme (4), einen Hitzeschild (7) aufweist, der dazu bestimmt ist, den Teil der elektrisch leitenden Ader, der sich zwischen dem Reibbelag und der Aufnahme (4) des Verriegelungsteils befindet, zu schützen, wenn die Endhülse in den Reibbelag eingesteckt ist.

9. Endhülse nach einem der Ansprüche 1 bis 8, dadurch gekennzeichnet, daß sie aus einem gegenüber Temperaturen in der Größenordnung von 450°C beständigen Material besteht, wie insbesondere Polyimid, einem Phenolharz, PEK oder PEEK.
